# EUROPEAN PATENT SPECIFICATION

(11) **EP 1 618 302 B1**
(45) Date of publication and mention of the grant of the patent: **29.04.2009**
(21) Application number: 03816437.2
(22) Date of filing: 08.09.2003
(51) Int. Cl.: F03G 6/04

(54) **FLOATING SOLAR CHIMNEY**
SCHWIMMEND GELAGERTER SOLARKAMIN
CHEMINEE SOLAIRE FLOTTANTE

(30) Priority: 27.03.2003 GR 2003100150
(43) Date of publication of application: 25.01.2006
(73) Proprietor: Papageorgiou, Christos, 14563 Kifissia, Athens (GR)
(72) Inventor: Papageorgiou, Christos, 14563 Kifissia, Athens (GR)
(86) International application number: PCT/GR2003/000037
(87) International publication number: WO 2004/085846

(56) References cited:
- DE-A- 3 006 702
- DE-U- 29 622 549
- LODHI M A K: "Application of helio-aero-gravity concept in producing energy and suppressing pollution" ENERGY CONVERSION AND MANAGEMENT, ELSEVIER SCIENCE PUBLISHERS, OXFORD, GB, vol. 40, no. 4, 1 March 1999 (1999-03-01), pages 407-421, XP004143655 ISSN: 0196-8904

## Description

The invention concerns solar chimney that can collaborate with solar collectors and wind turbo generators and form electric power stations working by solar power. Such conventional electric power systems using solar energy, with the method of solar collectors and solar chimneys, are based on the principle of solar heating of air in a solar collector of a large area. The warm air is up-drafting, through a collaborating solar chimney that is based on the center of the collector, to superior layers of atmosphere, acquiring updraft speed, due to the height of the solar chimneys. Part of the thermo mechanical energy of this up drafting current of warm air, via a system of the wind turbines and generators in the base of the solar chimney, transforms into electric energy. The solar chimney in this conventional system is manufactured by reinforced concrete. This has the following consequences:
- High manufacturing cost
- Limited height of the solar chimneys due to technological restrictions from the construction materials and from exterior limitations (earthquakes e.g.)

It is known that the output of such a power station is approximately proportional to the product of the height of solar chimney to the area of the collaborating solar collector. Thus for a given power output from such a solar power station the height of the solar chimney determines the area of its collaborating solar collector.
Information about solar chimneys can be found in the book "THE SOLAR CHIMNEY ELECTRICITY FROM THE SUN", by JORG SCHLAICH, 1995.
The proposed invention aims to eliminate all pre-mentioned disadvantages by increasing, for a given power output, the height of the solar chimney and decreasing their construction cost and the area of the solar collectors and therefore the total cost of the respective power plant of electricity.

This can be achieved if we construct the solar chimney a double wall from durable elastic of balloons or airships, filled with gas He (or other non flammable light gas) that makes the chimneys lighter than air. The lighter than air floating solar chimney can have much bigger height than the corresponding solar chimney from reinforced concrete, while simultaneously its costs remains considerably lower than the cost of a conventional chimney from reinforced concrete.
The idea of using lighter than air structures in order to replace concrete solar chimneys was proposed in several prior inventions. A characteristic proposal was the D1: DE 296225494. The lifting gas in D1 is partly in the hollow structure of the light air up drafting cylinder and in a hollow light structure connected in the top of this cylinder. The light cylindrical structure in D1 in order to stand in its upright position, either is guyed at the ground or is lifted by the hollow structure above it.
However any tall lighter than air cylindrical structure, that is used to up draft the warm air inside it for electricity production, shall encounter the following problems, that are not encountered by any prior art and D1:
- The forces and the respective huge bending moments arising by external strong winds that will destroy immediately any, standing in upright position, tall light structure.
- The big operational sub pressure, related with power production, acting on the cylindrical structure that can destroy this cylinder or deform its shape preventing its air up drafting operation.
- The differential forces on the cylindrical structure, due to the wind speed variation (in magnitude and direction) with altitude. These wind speed differences create forces between adjacent parts of the cylinder, than can destroy it.
The proposed floating solar chimney encounters all these problems by the way of its construction.
The construction of a floating lighter than air chimney is feasible taking into consideration that the solar chimney is used exclusively for the up-drafting of warm air. Thus solar chimney stresses arise from the exterior winds and the Bernoulli pressure from the internal stream of warm air. A clever, simple and inexpensive construction can face these stresses effectively. The modem plastic and composed materials that are used for airships or balloons can be used for such a construction combining light weight and high strength in extreme stresses with long life under any exterior conditions.

The advantages of the proposed invention are very important and indicatively but not exclusively are as follows:
- The height of the floating solar chimney can be unlimitedly increased up to some optimal height that will be determined by the materials, technology and cost.
- The construction cost of the floating solar chimney will be considerably lower than the cost of a conventional reinforced concrete chimney.
- The cross-section of the floating solar chimney can easily be altered with the height for the optimal operation of the solar chimney.
- The area of the collaborating solar collector will be decreased proportionally to the increase of height for the same nominal power output of the solar power station, and consecutively the construction cost of the solar collector will decrease proportionally.
- An optimal combination of the height of the floating solar chimney and the area of the solar collector can be chosen for the achievement of the optimal techno economical result.
- Seismic activity of the region does not influence the construction.

Hence the proposed invention could make the electrical power solar stations with floating solar chimneys economically competitive to other electrical power stations per kW of power of kWh of produced energy.
The proposed floating solar chimney is based on the seat (1.4) shown in figure la:
- The Main Chimney (1.1) is composed by parts. This has double wall filled with lighter than air inflammable gas that creates the necessary buoyancy force. This lifting force compels the main chimney to take, without exterior winds, a vertical position.
- The Heavy Mobile Base (1.2) by which the main chimney is suspended. The total weight of this heavy base is bigger than the total buoyancy of the main chimney. This has a result, without exterior winds, the heavy mobile base to sit on the seat (1.4) of the chimney.
- The folding lower part of the chimney (1.3) which without exterior winds is inside the upper part of the seat.

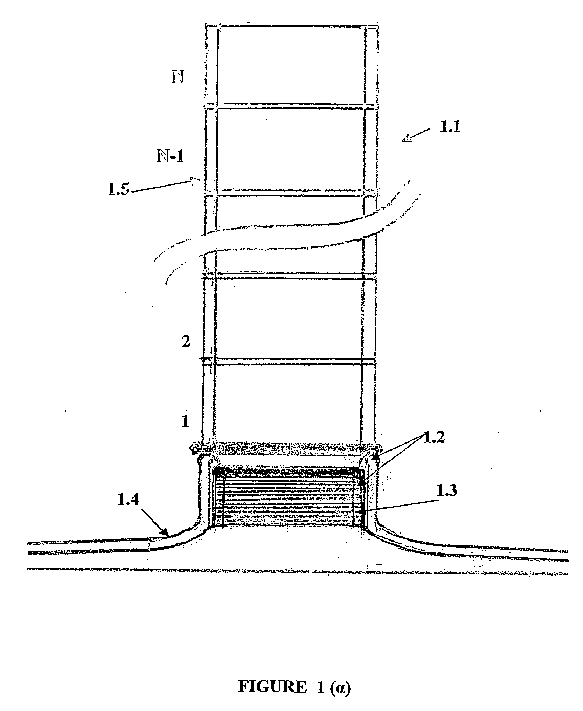

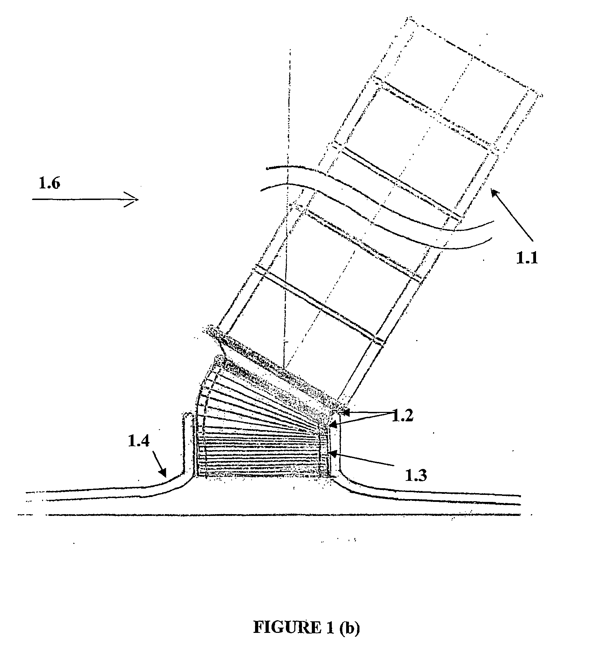

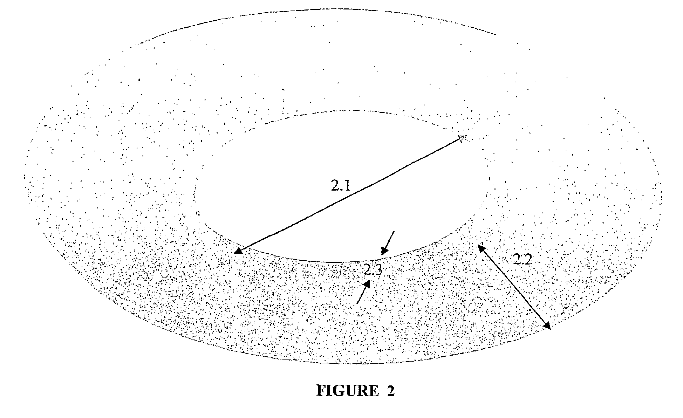

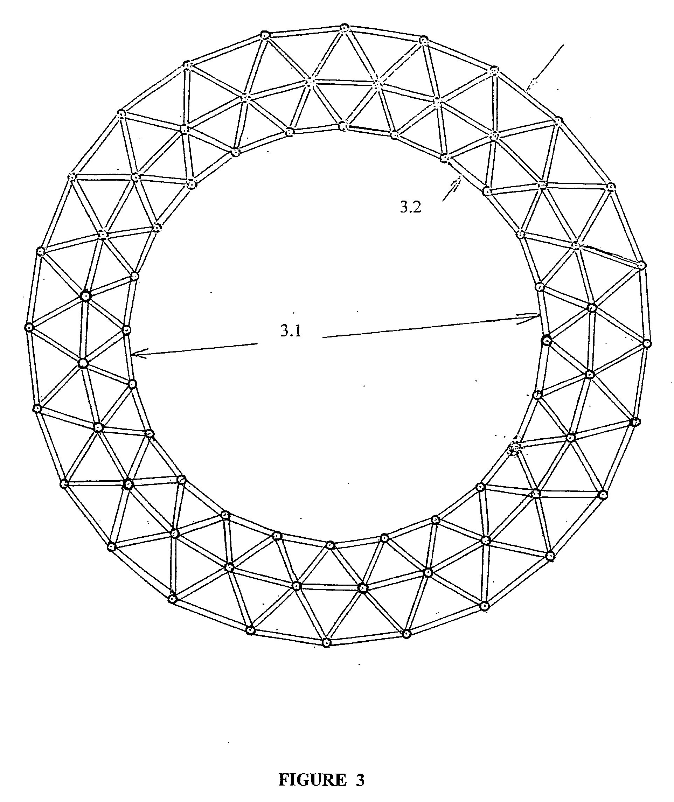

If exterior winds appear the main chimney (1.1) declines to a balance angle. The heavy base (1.2) supported in the edges of the seat receives also a corresponding declined position and the folding part of the chimney (1.3) that is fixed in the lower part of the Heavy Base, is lifted off and receives this decline, ensuring the continuity of the chimney as it appears in figure 1b.
An indicative way of constructing a floating chimney is presented in the following paragraphs. The proposed way of construction is indicative, because there are several ways in doing so. The proposed construction is based on the idea of developing the main solar chimney with horizontal balloon cylindrical rings (Ring D1, figure 2) from flexible wrapping of balloons or airships (with a average surface density of 0,068 kg/sqm). Each cylindrical balloon ring D1 is filled with gas He (that gives a lifting force under regular conditions 10,36 Nt/m) or other light non flammable gas (e.g. NH3 with lift force under regular conditions 4,97 Nt/m). The ring has an orthogonal cross-section and valves of fulfillment. The dimensions of orthogonal cross-section of ring D1 depend mainly from the diameter of solar chimney. Each cylindrical ring D1 will be separated from next from durable, in horizontal stresses, supporting ring D2 (figure 3). Rings D2 will be manufactured by pipes of hard plastic or composed materials or aluminum with suitable diameter and thickness. Hence the ring D2 supports balloon ring D1 from compressive forces of deformity. The total weight of ring D2 has to be smaller than the remain lift force of the balloon ring D1. Thus each balloon ring D1 will be able to lift up to any atmospheric height as part of floating solar chimney, lifting together at least one ring D2. The exterior part of ring D2 will have suitable tips for the fastening of rings D2 between them, with the help of threads of high strength in order that intermediary balloon rings D 1 to be under pressure.
The proposed floating solar chimney is a set of independent successive parts which are constituted by a constant number of balloon rings D1 and supporting rings D2. Each part is a compact durable set that can float due to its buoyancy. Each part of the chimney is suspended by at least three threads of high strength by the upper part of the Heavy Mobile Base (1.2), see figure 1a.
Thus each part can receive any declined position imposed by exterior winds without problem. The successive parts of the floating chimney are separated, with a balloon ring D1, full from air from the environment which instead of valve of fulfillment, has a simple aperture or a special valve that allows air to enter and to come out depending on the relative movement of successive independent parts of chimney by variable exterior winds. With this intermediate air rings each part of the floating solar chimney becomes dynamically independent from the rests. The main floating solar chimney (1.1) is the sum of these successive and dynamically independent parts fastened independently to the Heavy Base. This set and every part of it can self float and stand the forces from the Bernoulli pressures by the internal updraft of warm air and the exterior winds. The thickness of balloon ring D1 is sufficient for he satisfactory heat insulation of the internal warm current of air that runs through the solar chimney from the exterior air that has lower temperature.
The main floating solar chimney (1.1) leads to its Heavy Mobile Base (1.2). The Heavy Mobile Base (1.2) is constituted by two rings of equal weight connected between them with exceptionally durable threads with high strength and high modulus, invested with flexible durable plastic films, so that it can receive any decline position while remains attached to the top of the seat of chimney. The total weight of the Heavy Base (1.2) exceeds the overall lift force of the main chimney and forms with this a single set. Under regular conditions the upper ring of the Heavy Base, which is manufactured with bigger diameter than the diameter of the upper part of the seat (1.4), sits on the seat of the chimney (1.4) while the lower ring, that has smaller diameter than the internal diameter of upper part of the seat (1.4), remains inside the seat (1.4) of chimney. By the lower part of the internal ring of the Heavy Base (1.2) is suspended the final folding part (1.3) of the floating solar chimney. This folding part (1.3), type accordion, is constructed in a similar way as the main chimney, with the difference that the balloon rings D1 that constitute it, instead of valve of fulfillment have a simple aperture (or a special valve) which allows the air of the environment to enter and to come out of them, depending on the decline of main solar chimney. The height of the folding part is calculated so that it can receive the maximum decline of the main solar chimney.
The threads of high strength and modulus, combined with the intermediate supporting rings D2, ensure the strength of this folding part to the forces that it accepts and they do not allow the deformity of its cross-section when it is declined and unfolded. This allows the smooth operation of the floating solar chimney when exterior winds appear that compel the solar chimney to receive a decline angle of balance.

If a floating solar chimney is free, without the presence of exterior winds, will have a vertical position, forced by the net lift force of main chimney's balloon rings D1, (figure 1a). The exterior winds compel the floating solar chimney to receive a decline which the heavy base follows and finally the folding part receives it, as shown in figure 1b. The angle of decline will be the one for which the normal drag force, from the vertical on the chimney component of the wind velocity, is equal to the counterbalancing component of net lift force of floating solar chimney.
In this case the dynamic field of flow of exterior winds facilitates the coming out of hot air at the top of the solar chimney, and consequently facilitates the updraft movement of warm air inside the main chimney.
This action potentially compensates the reduction of active height of floating solar chimneys due to the decline that receives when exterior winds appear. Thus the power output by floating solar chimney can be practically independent of exterior winds.
The appropriate place of installment of this solar power station should be chosen in order that the expected local winds do not exceed some strength for safety reasons. The threads of high strength via which becomes the fastening of the rings D2 between them and the final fastening to the Heavy Base (1.2) can ensure the safe withholding of the floating solar chimney under the most unfavorable conditions of exterior winds even if these do not have practical probability to appear.

## Claims

1. A floating solar chimney comprising a lighter than air cylindrical structure used as a warm air up drafting operator when used in cooperation with a circular solar collector a set of air turbines geared to respective electric generator for electricity production, the lighter than air cylindrical structures providing thermal insulation to the rising air inside them
the floating solar chimney **characterized, in that** it further comprises :
- an adjustable lighter than air cylindrical structure, comprising:
a main chimney unit (1.1) including a plurality of dynamically independent floating parts (1.5), wherein each dynamically independent floating part includes at least one tubular balloon ring made by fabric containing non-flammable, lighter - than - air gas, and wherein each dynamically independent floating part (1.5) further includes at least one supporting ring, made of aluminum, plastic or composite material ,in order to withstand compressive forces, and wherein the at least one cylindrical balloon ring and the at least one supporting ring of each dynamically independent floating part are interconnected, and wherein each dynamically independent floating part (1.5) is separated from the adjacent dynamically independent floating part (1.5) by an independent tubular balloon ring, made by fabric, filled with ambient air, configured to freely draw in and emit its air, whereby each dynamically independent floating part (1.5) is enabled to move independently from adjacent dynamically independent floating parts;
a base unit (1.2) coupled to the main chimney unit, wherein each dynamically independent floating part (1.5) of the main chimney unit (1.1) is fastened independently to the base unit (1.2), using at least three threads and wherein the base unit (1.2) includes an upper ring and a lower ring having equal weight and different exterior diameters, and wherein the upper ring and the lower ring are fixedly tied, and wherein the total weight of the base unit is larger than the net lift force of the main chimney unit;
a dynamically variable folding unit (1.3) coupled to the base unit(1.2), wherein the dynamically variable folding unit is fastened to the lower ring of the base unit and has a flexible, accordion - like configuration, and wherein the dynamically variable folding unit includes a plurality of balloon rings and a plurality of supporting rings, and wherein the plurality of balloon rings of the dynamically variable folding unit each have one of an aperture and a valve configured to freely draw in and emit ambient air, whereby the dynamically variable folding unit is configured to bend in accordance with the orientation of the main chimney unit (1.1) and the base unit (1.2), due to external winds (1.6);
and a chimney seat (1.4) configured to accommodate the base unit (1.2) and the dynamically variable folding unit (1.3), wherein at least a portion of the base unit (1.2) is seated on the top portion of the chimney seat (1.4), and wherein at least a portion of the dynamically variable folding unit (1.3) is contained within the chimney seat, and wherein an exterior diameter of the upper ring is larger than an exterior diameter of the chimney seat, and an exterior diameter of the lower ring is smaller than an internal diameter of the chimney seat.

## Patentansprüche

1. Der schwimmend gelagerte Solarkamin ist eine zylindrische Konstruktion, die leichter als Luft ist. Er wird angewandt, damit Luft, die mittels eines kreisförmigen Sonnenkollektors erwärmt wird, in seinem inneren Raum nach oben strömen kann. Dadurch ensteht im Inneren der zylindrischen Konstruktion ein Aufwind der, mit Hilfe eines an elektrischen Generatoren angeschlossenen Luftturbinensatzes, elektrischen Strom produziert. Diese, leichter als die Luft, zylindrische Konstruktion isoliert thermisch die im inneren aufsteigende warme Luft. Überdies, der schwimmend gelagerte Solarkamin besteht aus folgenden charakteristischen Komponenten:
Eine, leichter als Luft, zylindrische Konstruktion bestehend aus:
Den Hauptkamin (1.1), welcher eine Vielzahl von dynamisch unabhängigen schwebenden Teilen (1.5) enthält, wobei jeder dynamisch unabhängiger schwebender Teil mindestens einen röhrenartigen Luftballon beinhaltet, der aus Stoff besteht, und welcher ein nicht-entflammbares, leichter als Luft, Gas enthält, und wobei jeder dynamisch unabhängiger schwebender Teil mindestens einen Stützring enthält, der aus Aluminium, Plastik, oder Verbundmaterial besteht, damit es den Kompressionskräften entgegenwirkt, und wobei mindestens ein zylindrischer, röhrenartiger Luftballon und ein Stützsring miteinander verbunden sind, und wobei jeder dynamisch unabhängiger schwebender Teil (1.5) sich vom nächstliegenden dynamisch unabhängigen schwebenden Teil durch einem röhrenartigen, aus Stoff bestehenden, Ring getrennt wird, wobei dieser Ring mit Umgebungsluft gefüllt ist, der frei ein- und ausströmen kann, damit bei allen dynamisch unabhängigen schwebenden Teilen die Bewegungsfreiheit ermöglicht wird;
Eine Basis (1.2), die mit dem Haupt-Schornstein(1.1) verbunden ist, wobei jeder dynamisch unabhängiger schwebender Teil (1.5) des Haupt-Kamins (1.1) gesondert, durch mindestens drei Metalldrähte, an der Basis(1.2) befestigt ist, und wobei die Basis(1.2) aus einem oberen und einem unteren Ring besteht, die dasselbe Gewicht und verschiedene Außendiameter haben, und wobei der obere Ring und der untere Ring starr miteinander verbunden sind, und wobei das Gesamtgewicht der Basis größer als die Nettoauftriebskraft des Haupt- Kamins (1.1) ist;
Eine dynamisch veränderliche faltbare Struktur (1.3), die an der Basis(1.2) verbunden ist, und wobei diese dynamisch veränderliche faltbare Struktur, die eine flexible und akkordeonartige Konfiguration hat, am unteren Ring der Basis verbunden ist, und wobei diese dynamisch veränderliche faltbare Struktur eine Vielzahl von ringartigen Luftballons und Stützsringen enthält , und wobei alle ringartige Luftballons der dynamisch veränderlichen faltbaren Struktur über ein Luftloch sowie ein Ventil verfügen, sodass die Umgebungsluft frei ein- und ausströmen kann, wobei diese dynamisch veränderliche faltbare Struktur so gestaltet ist, dass sie sich entsprechend der Neigung des Haupt-Kamins (1.1) und der Basis(1.2) beugt, wobei der Winkel dieser Neigung sich fortwährend verändert, aufgrund der Einwirkung von den Außenwinden(1.6); Und, zuletzt, den Haupt-Schornsteinsitz (1.4), der so konstruiert ist, damit die Basis (1.2) und die dynamisch veränderliche faltbare Struktur (1.3) befestigt werden, wobei wenigstens ein Teil der Basis(1.2) innerhalb des oberen Teils des Haupt- Kamins (1.4) ist, und wobei wenigstens ein Teil der dynamisch veränderlichen faltbaren Struktur (1.3) innerhalb des Haupt-Kamins (1.4) enthalten ist, und wobei der Außendiameter des oberen Ringes größer als der des Haupt-Kamins ist, und der Außendiameter des unteren Ringes kleiner als der innere Diameter des Haupt-Kamin ist.

## Revendications

1. Une cheminée solaire flottante comporte une structure cylindrique qui est plus léger d'air utilisée comme air chaud rédigeant vers le haut quand l'opérateur utilisé en coopération avec un collecteur solaire circulaire, un ensemble de turbines à air adaptées aux générateurs électriques respectifs pour la production de l'électricité, la structure cylindrique qui est plus léger d'air fournisse l'isolation thermique à l'air se levant à l'intérieur d'elles la cheminée solaire flottante est **caractérisée en ce qui** comprise aussi : une ajustable structure cylindrique qui est plus léger d'air et y compris: une unité de cheminée centrale (1.1) comprenant une pluralité des pièces flottantes dynamiquement indépendantes (1;5), où chaque partie flottante dynamiquement indépendante inclut au moins un anneau tubulaire de ballon fait par tissu inflammable, plus léger d'air gaz, et où chaque pièce dynamiquement indépendante : partie flottante (1.5) inclut aussi au moins un anneau de support, fait d'aluminium, plastique ou une matière composite pour résister aux forces de compression, et où l'au moins un anneau cylindrique de ballon et l'au moins un anneau de support de chaque partie flottante dynamiquement indépendante sont reliés ensemble, et où chaque partie flottante dynamiquement indépendante (1.5) est séparée de la partie dynamiquement indépendante adjacente de floating (1.5) par un anneau tubulaire indépendant de ballon fait par tissu rempli avec de l'air ambiant configuré pour dessiner librement dedans et pour émettre son air par lequel chaque partie flottante dynamiquement indépendante (1.5) soit permise de se déplacer indépendamment des pièces flottantes dynamiquement indépendantes adjacentes ; une unité de base (1.2) couplé avec la principale unité de cheminée, où chaque partie flottante dynamiquement indépendante (1.5) de la principale unité de cheminée (1.1) est attachée indépendamment à l'unité de base (1.2) utilisant au moins trois fils et où 1' unité de base (1.2) inclut l'anneau supérieur et un anneau inférieur qui sont attachées fixement, et où tout le poids de l'unité de base est plus grand que la force nette de l' unité principale de cheminée; une unité dynamiquement variable (1.3) couplée à l'unité de base (1.2) où l'unité dynamiquement variable est attachée à l'anneau inférieur de l'unité centrale et a une flexible configuration comme un accordéon, et où l'unité dynamiquement variable inclut une pluralité d'anneaux de ballon et une pluralité d'anneaux de support, et où la pluralité d'anneaux de ballon de l'unité dynamiquement variable chacune a un d'une ouverture et d'une valve configuré pour se remuer librement dedans et diffuser air ambiant où l'unité dynamiquement variable est configuré de cambrer selon l'orientation de la principale unité de cheminée (1.1) et l'unité de base (1.2), due aux vents extérieurs (1.6) ; et un siège de cheminée (1.4) configuré pour adapter à l'unité de base (1.2) et l'unité dynamiquement variable (1.3), où au moins une partie de l'unité de base (1.2) est posée de la partie supérieure du siège de cheminée (1.4), et où au moins une partie de l'unité dynamiquement variable (1.3) est contenue dans le siège de cheminée, et où un diamètre extérieur de l'anneau supérieur est plus grand qu'un diamètre extérieur du siège de cheminée, et un diamètre extérieur de l'anneau inférieur est plus petit qu'un diamètre interne du siège de cheminée.
